# EUROPEAN PATENT APPLICATION

(11) **EP 3 595 069 A1**
(43) Date of publication of application: **15.01.2020**
(21) Application number: 18763901.8
(22) Date of filing: 19.02.2018
(51) Int. Cl.: H01M 10/0562, C08F 236/10, C08L 9/06, H01M 4/139, H01M 4/62

(54) **BINDER FOR ALL-SOLID-STATE BATTERIES, BINDER COMPOSITION FOR ALL-SOLID-STATE BATTERIES AND METHOD FOR PRODUCING BINDER COMPOSITION FOR ALL-SOLID-STATE BATTERIES**

(30) Priority: 10.03.2017 JP 2017045748; 10.03.2017 JP 2017045749
(71) Applicant: Zeon Corporation, Tokyo 100-8246 (JP)
(72) Inventor: MAEDA Kouichirou, Tokyo 100-8246 (JP)
(74) Representative: Maiwald Patent- und Rechtsanwaltsgesellschaft mbH
(86) International application number: PCT/JP2018/005759
(87) International publication number: WO 2018/163776

(57) **Abstract**

Disclosed is a binder for an all-solid-state battery which is a copolymer of an aromatic vinyl compound and a conjugated diene compound, wherein a vinyl structure derived from the conjugated diene compound accounts for 10% by mass or more and 60% by mass or less of structural units derived from the conjugated diene compound.

## Description

### TECHNICAL FIELD

The present disclosure relates to binders for all-solid-state batteries, binder compositions for all-solid-state batteries, and methods of producing binder compositions for all-solid-state batteries.

### BACKGROUND

Demand for secondary batteries such as lithium ion batteries has been increasing in recent years for various applications such as mobile information terminals, mobile electronic devices, and other mobile terminals, and also domestic small power storage devices, electric motorcycles, electric vehicles, and hybrid electric vehicles.

The widespread use of secondary batteries in such applications has been accompanied by demand for further improvement of secondary battery safety. Effective methods of ensuring battery safety include preventing liquid leakage or replacing flammable organic solvent electrolytes with solid electrolytes.

As solid electrolytes, polymeric solid electrodes made of polyethylene oxide or the like have been known (PTL 1). However, polymeric solid electrolytes are flammable materials. As solid electrodes, inorganic solid electrolytes made of inorganic material have also been proposed (see, e.g., PTL 2). Inorganic solid electrolytes are solid electrolytes made of inorganic material and are less flammable than polymeric solid electrolytes. Thus, inorganic solid electrolytes are much safer than organic solvent electrolytes commonly used. As described in PTL 2, the development of highly safe all-solid-state secondary batteries using inorganic solid electrolytes has been progressing.

An all-solid-state secondary battery has a positive electrode, a negative electrode, and an inorganic solid electrolyte layer as an electrolyte layer between the positive and negative electrodes. PTL 3 and PTL 4 disclose an all-solid-state lithium secondary battery having a solid electrolyte layer which is formed by applying onto a positive or negative electrode a slurry composition for solid electrolyte layers that contains solid electrolyte particles and solvent and drying the slurry composition (i.e., coating method). When forming an electrode or an electrolyte layer by the coating method, it is required that a slurry composition containing active material or electrolyte have a viscosity and a fluidity that enable the application of the slurry composition. On the other hand, in the case of an electrode and an electrolyte layer which are formed by applying slurry compositions and drying the solvent, the choice of additives (e.g., binder) other than the active material and electrolyte is important in order for a secondary battery to exert favorable characteristics. For example, PTL 5 discloses various types of polymer as a binder, but fails to disclose using a specific type of polymer as a binder.

### CITATION LIST

### Patent Literature

PTL 1: JP4134617B
PTL 2: JPS59-151770A
PTL 3: JP2009-176484A
PTL 4: JP2009-211950A
PTL 5: JP2015-176819A

### SUMMARY

### (Technical Problem)

Studies carried out by the inventor have revealed that even when polymers of the same class are used as binders, their composition etc. affect the battery characteristics and processability during manufacture.

An object of the present disclosure is to provide a binder for all-solid-state batteries which is capable of providing an all-solid-state battery which has good battery characteristics and can be favorably manufactured in the manufacturing process, and a binder composition for all-solid-state batteries which comprises the binder.

### (Solution to Problem)

The inventor has made extensive studies and established that a binder having a specific composition can achieve the foregoing object. The inventor thus has completed the present disclosure.

Specifically, according to the present disclosure, there are provided:
(1) A binder for an all-solid-state battery, which is a copolymer of an aromatic vinyl compound and a conjugated diene compound, wherein a vinyl structure derived from the conjugated diene compound accounts for 10% by mass or more and 60% by mass or less of structural units derived from the conjugated diene compound;
(2) The binder for an all-solid-state battery according to (1), wherein the copolymer comprises a monomer unit of the aromatic vinyl compound in an amount of 10% by mass or more and 50% by mass or less;
(3) A binder composition for an all-solid-state battery comprising the binder for an all-solid-state battery according to (1) or (2) and an organic solvent;
(4) The binder composition for an all-solid-state battery according to (3), wherein the organic solvent has a boiling point at 1 atm of 80°C or higher;
(5) The binder composition for an all-solid-state battery according to (3) or (4), wherein the organic solvent has a boiling point at 1 atm of 100°C or higher; and
(6) A method of producing a binder composition for an all-solid-state battery for obtaining the binder composition for an all-solid-state battery according to any one of (3) to (5), comprising obtaining the copolymer by solution polymerization.

### (Advantageous Effect)

According to the present disclosure, there are provided a binder for all-solid-state batteries which is capable of providing an all-solid-state battery which has good battery characteristics and can be favorably manufactured in the manufacturing process, and a binder composition for all-solid-state batteries which comprises the binder.

### DETAILED DESCRIPTION

The following provides description of a binder for all-solid-state batteries of the present disclosure. The binder is a copolymer of an aromatic vinyl compound and a conjugated diene compound, wherein a vinyl structure derived from the conjugated diene compound accounts for 10% by mass or more and 60% by mass or less of structural units derived from the conjugated diene compound.

### (Copolymer)

The copolymer contained in the binder for all-solid-state batteries (hereinafter also simply referred to as "binder") of the present disclosure is a copolymer of an aromatic vinyl compound and a conjugated diene compound, wherein a vinyl structure derived from the conjugated diene compound accounts for 10% by mass or more and 60% by mass or less of structural units derived from the conjugated diene compound.

Examples of aromatic vinyl compounds include styrene, α-methylstyrene, o-methylstyrene, m-methylstyrene, p-methylstyrene, t-butylstyrene, divinylbenzene, N,N-dimethyl-p-aminoethylstyrene, 2,4-dimethylstyrene, N,N-diethyl-p-aminoethylstyrene, 2,4-diethylstyrene, vinyl naphthalene, and vinyl anthracene. Particularly preferred aromatic vinyl compounds are styrene and α-methylstyrene. These aromatic vinyl compounds may be used singly or in combination of two or more kinds at any ratio.

The proportion of the monomer unit of the aromatic vinyl compound in the copolymer is preferably 10% by mass or more, more preferably 15% by mass or more, and even more preferably 18% by mass or more, but preferably 50% by mass or less, and more preferably 40% by mass or less. When the proportion of the monomer unit of the aromatic vinyl compound in the copolymer is not greater than the upper limit value described above, it is possible to inhibit a phenomenon wherein an excessively high proportion of the monomer unit of the aromatic vinyl compound causes cracking or chipping when punching out an electrode body or the like. When the proportion of the monomer unit of the aromatic vinyl compound in the copolymer is not less than the lower limit value described above, it is possible to inhibit a phenomenon wherein an excessively low proportion of the monomer unit of the aromatic vinyl compound reduces the ion conductivity of the resulting all-solid-state battery or electrode.

Examples of conjugated diene compounds include 1,3-butadiene, isoprene, 2,3-dimethyl-1,3-butadiene, 1,3-pentadiene, 2-methyl-1,3-pentadiene, 1,3-hexadiene, and 4,5-dimethyl-1,3-octadiene. Particularly preferred conjugated diene compounds are 1,3-butadiene and isoprene. These conjugated diene compounds may be used singly or in combination of two or more kinds at any ratio.

The proportion of the monomer unit of the conjugated diene compound in the copolymer is preferably 50% by mass or more and 90% by mass or less. When the proportion of the monomer unit of the conjugated diene compound in the copolymer is not greater than the upper limit value described above, it is possible to inhibit a phenomenon wherein an excessively high proportion of the monomer unit of the conjugated diene compound causes stains (binder transfer) to be seen also on a pressing rod (indenter) used for pressing when forming a solid electrolyte layer, a positive electrode active material layer or a negative electrode active material layer and also reduces the ion conductivity of the resulting all-solid-state battery or electrode. When the proportion of the monomer unit of the conjugated diene compound in the copolymer is not less than the lower limit value described above, it is possible to inhibit a phenomenon wherein an excessively low proportion of the monomer unit of the conjugated diene compound results in hardening of the resulting electrode.

### (Adjustment of Amount of Vinyl Structure)

The amount of the vinyl structure derived from the conjugated diene compound contained in the copolymer used in the present disclosure is 10% by mass or more and 60% by mass or less among structural units derived from the conjugated diene compound, and preferably 15% or more and 60% by mass or less, and more preferably 18% by mass or more and 60% by mass or less.

When the amount of the vinyl structure derived from the conjugated diene compound contained in the copolymer is excessively high, the resulting electrode becomes hard and where the electrode is produced by the coating method, the shrinkage of the coating film becomes large and cracking easily occurs. Further, when the amount of the vinyl structure is excessively high, even when no cracks are observed on the surface by visual observation of the appearance, generation of internal cracks causes disconnection of ion conduction paths thus reducing the ion conductivity and increasing the resistance.

On the other hand, when the amount of the vinyl structure is excessively low, the ion conductivity decreases due to coverage of the surface of the solid electrolyte layer, and stains (binder transfer) are also seen on a pressing rod (indenter) used for pressing when forming the solid electrolyte layer. Further, when the amount of the vinyl structure is excessively low, the pressed solid electrolyte layer does not have a smooth surface, so that the contact resistance between the solid electrolyte layer and the electrode active material layer (positive or negative electrode active material layer) increases during resistance measurement, resulting in increased apparent resistance. To achieve favorable battery performance, the surface of the solid electrolyte layer is preferably smooth in an actual all-solid-state battery as well.

The amount of the vinyl structure derived from the conjugated diene compound contained in the copolymer can be adjusted by using a vinylating agent at the time of polymerization. Polar compounds can be used as a vinylating agent for controlling the microstructure of the conjugated diene moiety. Examples of polar compounds include, but not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium t-amylate, potassium t-butylate, sodium t-butylate, and sodium amidate; and phosphine compounds such as triphenylphosphine. These polar compounds may be used singly or in combination of two or more kinds at any ratio.

The amount of the vinylating agent used is appropriately selected according to the type of vinylating agent and the required amount of the vinyl structure in the copolymer. The amount of the vinylating agent used is usually 0.1 moles or more and 100 moles or less, preferably 0.32 moles or more, and more preferably 0.35 moles or more, but preferably 50 moles or less, and more preferably 10 moles or less, per mole of a polymerization initiator described later.

Polymerization methods used to obtain the copolymer are not particularly limited. Any polymerization method can be used, such as, for example, solution polymerization, suspension polymerization, bulk polymerization or emulsion polymerization, with solution polymerization being preferred. Any mode of the polymerization reaction can be used, such as, for example, ionic polymerization, radical polymerization, or living radical polymerization.

When using solution polymerization, polymerization is carried out in a solvent in the presence of a polymerization initiator. Organolithium compounds can be used as a polymerization initiator, for example. Specific examples of organolithium compound include monoorganolithiums such as n-butyllithium, sec-butyllithium, t-butyllithium, hexyllithium, and phenyllithium; and multifunctional organolithium compounds such as dilithiomethane, 1,4-dilithiobutane, and 1,4-dilithio-2-ethylcyclohexane.

Examples of solvents usable for solution polymerization include hydrocarbon solvents. More specific examples thereof include aliphatic hydrocarbons such as n-butane, n-pentane, isopentane, n-hexane, n-heptane, and isooctane; alicyclic hydrocarbons such as cyclopentane, cyclohexane, methylcyclopentane, methylcyclohexane, decalin, bicyclo[4.3.0]nonane, and tricyclo[4.3 .0.1^{2,5}]decane; and aromatic hydrocarbons such as benzene, toluene, and xylene. Preferred are alicyclic hydrocarbons and aromatic hydrocarbons. These solvents may be used singly or in combination of two or more kinds at any ratio. The amount of the solvent used is usually 200 parts by mass or more and 2,000 parts by mass or less per 100 parts of the total monomer used for polymerization.

The polymerization reaction is usually carried out in a batchwise or continuous process in the temperature range of -78°C to 150°C. In order to enhance the randomness of a bound styrene chain distribution, for example, as described in JPS59-140211A and JPS56-143209A, polymerization can also be effected by continuously or intermittently supplying the conjugated diene compound in the polymerization system or by continuously or intermittently supplying a mixture of the aromatic vinyl compound and the conjugated diene compound in the polymerization system.

After completion of the polymerization reaction, the produced polymer is recovered by standard methods, e.g., by quenching the polymerization reaction by the addition of an alcohol such as methanol, isopropanol or denatured alcohol as a polymerization terminator, followed by the addition of a phenolic or phosphorous antioxidant and removal of the solvent by steam stripping or other method.

When using emulsion polymerization, emulsion polymerization can be carried out in accordance with standard methods. Polymerization auxiliary materials that are typically used such as emulsifiers, polymerization initiators, and chain transfer agents can be used during emulsion polymerization.

Any emulsifier can be used so long as a desired polymer can be obtained. Examples thereof include anionic surfactants, nonionic surfactants, cationic surfactants, and amphoteric surfactants. Preferred are anionic surfactants such as alkylbenzene sulfonates, aliphatic sulfonates, higher alcohol sulfates, α-olefin sulfonates, and alkyl ether sulfates.

The amount of the emulsifier may be any amount so long as a desired copolymer can be obtained. The amount of the emulsifier is preferably 0.5 parts by mass or more, and more preferably 1 part by mass or more, but preferably 10 parts by mass or less, and more preferably 5 parts by mass or less, per 100 parts by mass of the total monomer used for polymerization.

Examples of polymerization initiators used for polymerization include organic peroxides such as lauroyl peroxide, diisopropyl peroxy dicarbonate, di-2-ethylhexyl peroxy dicarbonate, t-butyl peroxy pivalate, and 3,3,5-trimethylhexanoyl peroxide; azo compounds such as α,α'-azobisisobutyronitrile; ammonium persulfate; and potassium persulfate.

For polymerization, seed particles may be used to perform seeded polymerization. The polymerization conditions may also be freely selected in accordance with the polymerization method, the type of polymerization initiator, and so forth. The proportions of monomers in a monomer composition used to prepare the copolymer can be determined in accordance with the proportions of the corresponding repeat units in the copolymer.

Examples of solvents usable for emulsion polymerization include aqueous solvents. An aqueous solvent refers to a solvent containing water, and has no flammability. As long as the copolymer is obtainable without compromising the effect of the present disclosure, water may be used as a main solvent and aqueous solvents other than water may be mixed therewith. Examples of aqueous solvents other than water include ketones, alcohols, glycols, glycol ethers, and ethers.

### (Binder Composition)

The binder composition for all-solid-state batteries (hereinafter also simply referred to as "binder composition") of the present disclosure comprises the copolymer described above and an organic solvent. Specific examples of organic solvents include aromatic hydrocarbon compounds such as benzene, toluene and xylene; and saturated aliphatic and alicyclic hydrocarbon compounds such as n-hexane, cyclohexane, methylcyclohexane, ethylcyclohexane, nonane, decane, decalin, tetralin, dodecane, gasoline, and industrial gasoline. It is preferred to use an organic solvent having a boiling point at 1 atm of 80°C or higher, with cyclohexane or xylene being more preferably used. It is more preferred that the boiling point at 1 atm of the organic solvent is 100°C or higher.

As the binder composition, a solution or dispersion of the copolymer (binder) prepared as described above may be used as it is. Alternatively, the binder composition may be prepared by adding the organic solvent described above to the solution or dispersion of the copolymer, or replacing the dispersion medium of the solution or dispersion of the copolymer with the organic solvent.

### (All-Solid-State Battery)

Using the binder composition of the present disclosure, at least one, preferably all, of a positive electrode active material layer, a negative electrode active material layer and a solid electrolyte layer is/are formed, whereby an all-solid-state battery can be obtained which includes a positive electrode having the positive electrode active material layer, a negative electrode having the negative electrode active material layer, and the solid electrolyte layer disposed between the positive and negative electrode active material layers. The positive electrode has the positive electrode active material layer on a current collector, and the negative electrode has the negative electrode active material layer on a current collector. The negative electrode active material layer is formed from a slurry composition for negative electrode active material layers, the positive electrode active material layer from a slurry composition for positive electrode active material layers, and the solid electrolyte layer from a slurry composition for solid electrolyte layers.

The following describes the solid electrolyte layer, the positive electrode active material layer, and the negative electrode active material layer.

### (Solid Electrolyte Layer)

The solid electrolyte layer is formed for example by applying a slurry composition for solid electrolyte layers containing solid electrolyte particles and a binder composition for solid electrolyte layers onto a positive or negative electrode active material layer described later and drying the slurry composition.

### (Solid Electrolyte Particles)

The solid electrolyte is in particulate form as a result of having undergone pulverization and has an indeterminate shape rather than a completely spherical shape. The size of fine particles is normally measured by a method in which the particles are irradiated with laser light and then scattered light is measured, for example. In this situation, the particle diameter is a value that presumes that the shape of a single particle is spherical. When multiple particles are measured together, the proportion of particles having a certain particle diameter can be expressed as a particle size distribution. The size of solid electrolyte particles forming a solid electrolyte layer is typically indicated by the average particle diameter through a value measured by this method.

The average particle diameter of the solid electrolyte particles is preferably 0.3 µm or more and 1.3 µm or less from the viewpoint that a slurry composition for solid electrolyte layers having good dispersibility and coatability can be obtained. The average particle diameter of the solid electrolyte particles is a number-average particle diameter obtained by measuring a particle size distribution by laser diffraction.

The solid electrolyte particles are not particularly limited as long as they have lithium ion conductivity. The solid electrolyte particles preferably comprise a crystalline inorganic lithium ion conductor or an amorphous inorganic lithium ion conductor.

Examples of crystalline inorganic lithium ion conductors include Li₃N, LISICON (Li₁₄Zn(GeO₄)₄), perovskite-type Li_{0.5}La_{0.5}TiO₃, LIPON (Li_{3+y}PO₄₋ₓNₓ), and Thio-LISICON (Li_{3.25}Ge_{0.25}P_{0.75}S₄).

Amorphous inorganic lithium ion conductors are not particularly limited so long as they contain S (sulfur atom) and exhibit ion conductivity (i.e., as long as they are sulfide solid electrolyte materials). In a case in which the all-solid-state battery in which the binder composition of the present disclosure is to be used is an all-solid-state lithium secondary battery, a material obtained using a raw material composition containing Li₂S and a sulfide of an element belonging to any of groups 13 to 15 may be used as the sulfide solid electrolyte material. The method by which the sulfide solid electrolyte material is synthesized using such a raw material composition may be an amorphization method, for example. Examples of amorphization methods that may be used include mechanical milling and melt quenching, of which, mechanical milling is preferred. This is because mechanical milling enables processing at normal temperature and simplification of the production process.

The element belonging to any of groups 13 to 15 may be Al, Si, Ge, P, As, Sb, or the like. Specific examples of sulfides of elements belonging to groups 13 to 15 include Al2S₃, SiS₂, GeS₂, P₂S₃, P₂S₅, As₂S₃, and Sb₂S₃. Of these sulfides, the use of a sulfide of an element belonging to group 14 or 15 is preferable. In particular, the sulfide solid electrolyte material obtained using a raw material composition containing Li₂S and a sulfide of an element belonging to any of groups 13 to 15 is preferably a Li₂S-P₂S₅ material, a Li₂S-SiS₂ material, a Li₂S-GeS₂ material, or a Li₂S-Al₂S₃ material, and is more preferably a Li₂S-P₂S₅ material. This is because these materials have excellent Li ion conductivity.

Moreover, the sulfide solid electrolyte material preferably includes bridging sulfur. The inclusion of bridging sulfur increases ion conductivity. When a sulfide solid electrolyte material includes bridging sulfur, reactivity with a positive electrode active material is normally high, and a high-resistance layer is more readily formed. However, as a result of the binder composition containing the aromatic vinyl compound monomer unit and the conjugated diene compound monomer unit being used in the present disclosure, an effect of the present disclosure with regard to inhibiting high-resistance layer formation can be sufficiently displayed. The inclusion of bridging sulfur can be judged by considering, for example, measurement results of a Raman spectrum, the chemical composition ratio of raw material, measurement results of NMR, and the like.

The molar fraction of Li₂S in a Li₂S-P₂S₅ material or a Li₂S-Al2S₃ material is, for example, within a range of 50% to 74%, and preferably within a range of 60% to 74% from the viewpoint of more reliably obtaining a sulfide solid electrolyte material including bridging sulfur.

Moreover, the sulfide solid electrolyte material may be sulfide glass, or may be crystallized sulfide glass obtained through heat treatment of this sulfide glass. The sulfide glass can be obtained by the previously described amorphization methods, for example. The crystallized sulfide glass can be obtained by subjecting sulfide glass to heat treatment, for example.

In particular, the sulfide solid electrolyte material is preferably crystallized sulfide glass represented by Li₇P₃S₁₁. This is because this crystallized sulfide glass has particularly good Li ion conductivity. Li₇P₃S₁₁ can be synthesized by, for example, mixing Li₂S and P₂S₅ in a molar ratio of 70:30, performing amorphization using a ball mill to synthesize sulfide glass, and subjecting the obtained sulfide glass to heat treatment at a temperature of 150°C or higher and 360°C or lower to synthesize the Li₇P₃S₁₁.

### (Binder for Solid Electrolyte Layer)

A binder for solid electrolyte layers is used in order to bind the solid electrolyte particles to form a solid electrolyte layer. It is preferred that the binder for all-solid-state batteries of the present disclosure is used as the binder for solid electrolyte layers.

### (Positive Electrode Active Material Layer)

The positive electrode active material layer is formed for example by applying a slurry composition for positive electrode active material layers containing a positive electrode active material, solid electrolyte particles, and a binder composition for positive electrodes onto a surface of a current collector described later, and drying the slurry composition. The slurry composition for positive electrode active material layers is produced for example by mixing a positive electrode active material, solid electrolyte particles, a binder composition for positive electrodes, an organic solvent, and additional optional component(s).

### (Positive Electrode Active Material)

The positive electrode active material is a compound that can store and release lithium ions. Positive electrode active materials are broadly categorized as those composed of inorganic compounds and those composed of organic compounds.

Examples of positive electrode active materials composed of inorganic compounds include transition metal oxides, composite oxides of lithium and transition metals, and transition metal sulfides. The transition metal may be Fe, Co, Ni, Mn, or the like. Specific examples of inorganic compounds that may be used in the positive electrode active material include lithium-containing composite metal oxides such as LiCoO₂, LiNiO₂, LiMnO₂, LiMn₂O₄, LiFePO₄, and LiFeVO₄; transition metal sulfides such as TiS₂, TiS₃, and amorphous MoS₂; and transition metal oxides such as Cu₂V₂O₃, amorphous V₂O-P₂O₅, MoO₃, V₂O₅, and V₆O₁₃. These compounds may have undergone partial element substitution.

Examples of positive electrode active materials composed of organic compounds include polyaniline, polypyrrole, polyacenes, disulfide compounds, polysulfide compounds, and N-fluoropyridinium salts. The positive electrode active material may be a mixture of the organic and inorganic compounds described above.

The average particle diameter of the positive electrode active material used in the present disclosure is normally 0.1 µm or more and 50 µm or less, and preferably 1 µm or more and 20 µm or less from the viewpoint of improving battery characteristics such as load characteristics and charge/discharge cycle characteristics, and from the viewpoint that an all-solid-state secondary battery having high charge/discharge capacity can be obtained, and handling of the slurry composition for positive electrode active material layers and handling during positive electrode production are easy. The average particle diameter of the positive electrode active material can be obtained by measuring a particle size distribution by laser diffraction.

### (Solid Electrolyte Particles)

The solid electrolyte particles can be the same as those exemplified above for the solid electrolyte layer.

The mass ratio of the positive electrode active material and the solid electrolyte particles (positive electrode active material:solid electrolyte particles) is preferably 90:10 to 50:50, and more preferably 60:40 to 80:20. When the mass ratio of the positive electrode active material and the solid electrolyte particles is within any of the ranges set forth above, it is possible to inhibit a phenomenon of battery capacity decreasing as a result of the amount of positive electrode active material in the battery decreasing due to the mass proportion constituted by the positive electrode active material being too small. Moreover, it is possible to inhibit a phenomenon of battery capacity decreasing as a result of electrical conductivity being insufficient and the positive electrode active material not being effectively used due to the mass proportion constituted by the solid electrolyte particles being too small.

### (Binder for Positive Electrode)

A binder for positive electrodes is used in order to bind the positive electrode active material and the solid electrolyte particles to form a positive electrode active material layer. As the binder for positive electrodes, it is preferred to use the copolymer constituting the binder composition for all-solid-state batteries.

From the viewpoint of preventing detachment of the positive electrode active material from the electrode without impairing battery reactions, the amount (in solid content) of the binder for positive electrodes in the slurry composition for positive electrode active material layers is preferably 0.1 parts by mass or more, and more preferably 0.2 parts by mass or more, but preferably 5 parts by mass or less, and more preferably 4 parts by mass or less, per 100 parts by mass of the positive electrode active material.

Organic solvents usable in the slurry composition for positive electrode active material layers can be the same as those exemplified above for the binder composition. From the viewpoint of obtaining good coating characteristics while maintaining dispersibility of the solid electrolyte, the amount of the organic solvent in the slurry composition for positive electrode active material layers is preferably 20 parts by mass or more, and more preferably 30 parts by mass or more, but preferably 80 parts by mass or less, and more preferably 70 parts by mass or less, per 100 parts by mass of the positive electrode active material.

In addition to the components described above, the slurry composition for positive electrode active material layers may comprise optional additives exhibiting various functions, such as conductive agents and reinforcing materials. Such additional components are not particularly limited as long as they do not influence battery reactions.

### (Conductive Agent)

Conductive agents are not particularly limited as long as they can impart electrical conductivity. Typical examples thereof include carbon powders such as acetylene black, carbon black, and graphite, and fibers and foils of various metals.

### (Reinforcing Material)

Various inorganic and organic fillers having a spherical, plate-like, rod-like, or fibrous form can be used as reinforcing materials.

### (Negative Electrode Active Material Layer)

The negative electrode active material layer comprises a negative electrode active material.

### (Negative Electrode Active Material)

Examples of negative electrode active materials include carbon allotropes such as graphite and coke. A negative electrode active material containing such a carbon allotrope can be used in a mixed or coated form with a metal, a metal salt, an oxide, or the like. Other examples of negative electrode active materials include oxides and sulfates of silicon, tin, zinc, manganese, iron, nickel, and the like, lithium metal, lithium alloys such as Li-Al, Li-Bi-Cd, and Li-Sn-Cd, lithium transition metal nitrides, and silicon. In the case of a metal material, the metal material may be used as an electrode in the form of a metal foil or metal plate, or may be used in a particulate form.

When the negative electrode active material is in a particulate form, the negative electrode active material layer is formed for example by applying a slurry composition for negative electrode active material layers containing the negative electrode active material, solid electrolyte particles, and binder for negative electrodes onto a surface of a current collector described later, and drying the slurry composition. The slurry composition for negative electrode active material layers is produced for example by mixing a negative electrode active material, solid electrolyte particles, a binder for negative electrodes, an organic solvent, and additional optional component(s).

In the case of a particulate negative electrode active material, the average particle diameter of the negative electrode active material is normally 1 µm or more and 50 µm or less, and preferably 15 µm or more and 30 µm or less from the viewpoint of improving battery characteristics such as initial efficiency, load characteristics, and charge/discharge cycle characteristics.

The mass ratio of the negative electrode active material and the solid electrolyte particles (negative electrode active material:solid electrolyte particles) is preferably 90:10 to 50:50, and more preferably 60:40 to 80:20. When the mass ratio of the negative electrode active material and the solid electrolyte particles is within any of the ranges set forth above, it is possible to inhibit a phenomenon of battery capacity decreasing as a result of the amount of negative electrode active material in the battery decreasing due to the proportion constituted by the negative electrode active material being too small. Moreover, it is possible to inhibit a phenomenon of battery capacity decreasing as a result of electrical conductivity being insufficient and the negative electrode active material not being effectively used due to the proportion constituted by the solid electrolyte particles being too small.

### (Binder for Negative Electrode)

A binder for negative electrodes is used in order to bind the negative electrode active material and the solid electrolyte particles to form a negative electrode active material layer. As the binder for negative electrodes, it is preferred to use the binder composition for all-solid-state batteries of the present disclosure.

In the case of a particulate negative electrode active material, from the viewpoint of preventing detachment of the electrode active material from the electrode without impairing battery reactions, the amount (in solid content) of the binder for negative electrodes in the slurry composition for negative electrode active material layer is preferably 0.1 parts by mass or more, and more preferably 0.2 parts by mass or more, but preferably 5 parts by mass or less, and more preferably 4 parts by mass or less, per 100 parts by mass of the negative electrode active material.

Solid electrolyte particles usable in the slurry composition for negative electrode active material layers can be the same as those exemplified above for the solid electrolyte, and organic solvents usable in the slurry composition can be the same as those exemplified above for the binder composition. Further, additional optional components usable in the slurry composition can be the same as those exemplified above for the positive electrode material layer.

### (Current Collector)

Current collectors used to form thereon the positive or negative electrode active material layer are not particularly limited so long as they are made of materials having electrical conductivity and electrochemical durability. Iron, copper, aluminum, nickel, stainless steel, titanium, tantalum, gold, platinum and other metal materials are preferred from the viewpoint of their heat resistance. Aluminum is particularly preferred for a positive electrode and copper is particularly preferred for a negative electrode. The shape of the current collector is not particularly limited, but the current collector is preferably a sheet-shaped current collector having a thickness of approximately 0.001 mm to 0.5 mm. The current collector is preferably subjected to surface roughening treatment before use in order to increase adhesion strength with the positive or negative electrode active material layer. Methods of surface roughening include mechanical polishing, electrolytic polishing, and chemical polishing. Mechanical polishing is performed, for example, using a coated abrasive in which abrasive grains are bonded to cloth or paper, a whetstone, an emery wheel, or a wire brush including steel wire or the like. An intermediate layer may be formed on the surface of the current collector in order to increase electrical conductivity or adhesion strength of the current collector with the positive or negative electrode active material layer.

### (Production of Slurry Composition for Solid Electrolyte Layer>

The slurry composition for solid electrolyte layers is obtained for example by mixing the above-described solid electrolyte particles, binder for solid electrolyte layers, organic solvent, and additional optional component(s).

### (Production of Slurry Composition for Positive Electrode Active Material Layer)

The slurry composition for positive electrode active material layers is obtained for example by mixing the above-described positive electrode active material, solid electrolyte particles, binder for positive electrodes, organic solvent and additional optional component(s).

### (Production of Slurry Composition for Negative Electrode Active Material Layer)

The slurry composition for negative electrode active material layers is obtained for example by mixing the above-described negative electrode active material, solid electrolyte particles, binder for negative electrodes, organic solvent and additional optional component(s).

Mixing methods used to prepare the slurry compositions (slurry compositions for solid electrolyte layers, positive electrode active material layers, and negative electrode active material layers) are not particularly limited. For example, mixing may be effected using a mixer such as a stirrer, a shaker or a rotator. Other examples of mixing methods involve the use of a dispersing and kneading device such as a homogenizer, a ball mill, a bead mill, a planetary mixer, a sand mill, a roll mill, or a planetary kneader. Mixing methods that use a planetary mixer, a ball mill or a bead mill are preferred from the viewpoint that such methods can inhibit the aggregation of the solid electrolyte particles.

### (Manufacture of All-Solid-State Battery)

The positive electrode of an all-solid-state battery is obtained by forming a positive electrode active material layer on a current collector. The positive electrode active material layer is formed for example by applying the slurry composition for positive electrode active material layers onto a current collector and drying the slurry composition.

When a metal foil or a metal plate is used as a negative electrode active material, the metal foil or metal plate may be used as it is as the negative electrode of the all-solid-state battery. When the negative electrode active material is in a particulate form, the negative electrode is obtained by forming a negative electrode active material layer on a current collector different from the current collector of the positive electrode. The negative electrode active material layer is formed by applying the slurry composition for negative electrode active material layers onto a current collector different from the current collector of the positive electrode and drying the slurry composition.

Next, a solid electrolyte layer is formed for example by applying the slurry composition for solid electrolyte layers onto the positive or negative electrode active material layer thus formed and drying the slurry composition. The electrode on which the solid electrolyte layer is not formed and the electrode on which the solid electrolyte layer is formed are then laminated to produce an all-solid-state battery device.

Methods of applying the slurry compositions for positive and negative electrode active material layers onto respective current collectors are not particularly limited. Application may be effected for example by doctor blade coating, dip coating, reverse roll coating, direct roll coating, gravure coating, extrusion coating, or brush coating. The amounts of the slurry compositions applied are also not particularly limited. Application is normally effected such that the thickness of the active material layer formed after removal of organic solvent is 5 µm or more and 300 µm or less, and preferably 10 µm or more and 250 µm or less. Drying methods are not particularly limited and examples include drying by warm, hot, or low-humidity air, drying in a vacuum, and drying through irradiation with (far) infrared radiation, electron beams, or the like. The drying conditions are normally adjusted such that the organic solvent is volatilized as quickly as possible within a rate range for which cracks do not form in the electrode active material layer due to stress concentration and for which peeling of the electrode active material layer from the current collector does not occur. Moreover, an electrode obtained after drying may be pressed in order to stabilize the electrode. Non-limiting examples of pressing methods include mold pressing and calender pressing.

Drying is carried out at a temperature at which sufficient volatilization of the organic solvent occurs. Specifically, the drying temperature is preferably 50°C or higher and 250°C or lower, and more preferably 80°C or higher and 200°C or lower from the viewpoint that good electrode active material layers can be formed without thermal decomposition of the binders for positive and negative electrodes. The drying time is not particularly limited and is normally within a range of 10 minutes to 60 minutes.

Methods of applying the slurry composition for solid electrolyte layers onto the positive or negative electrode active material layer are not particularly limited Application may be carried out by the same methods as those described above for applying the slurry compositions for positive and negative electrode active material layers on respective current collectors. However, gravure coating is preferred from the viewpoint that this enables formation of the solid electrolyte layer as a thin film. The amount of the slurry composition applied is also not particularly limited. Application is normally effected such that the thickness of the solid electrolyte layer formed after removal of organic solvent is 2 µm or more and 20 µm or less, and preferably 3 µm or more and 15 µm or less. The drying method, drying conditions, and drying temperature are the same as those used for the slurry compositions for positive and negative electrode active material layers.

Moreover, a laminate obtained by laminating the electrode on which the solid electrolyte layer is formed and the electrode on which the solid electrolyte layer is not formed may be subjected to pressing. Pressing methods are not particularly limited, with examples including plate pressing, roll pressing, and cold isostatic pressing (CIP). The pressing pressure is preferably 5 MPa or more, and more preferably 7 MPa or more, but preferably 700 MPa or less, and more preferably 500 MPa or less, from the viewpoint of lowering the resistance at each interface between the electrode and the solid electrolyte layer, and further the contact resistance between particles in each layer, to achieve good battery characteristics.

Although no specific limitations are placed on whether the slurry composition for solid electrolyte layers is applied onto the positive electrode active material layer or the negative electrode active material layer, it is preferred that the slurry composition is applied onto whichever of the active material layers has an electrode active material with a larger particle diameter used therein. Depressions and protrusions are formed over the surface of an active material layer when an electrode active material having a large particle diameter is used. These depressions and protrusions on the active material layer surface can be smoothed through application of the slurry composition. As a result, the contact area between the solid electrolyte layer and the electrode is increased when the electrode on which the solid electrolyte layer is formed and the electrode on which the solid electrolyte layer is not formed are laminated, and this reduces interface resistance.

The obtained all-solid-state battery device is placed in a battery container either as obtained or after rolling, folding, or the like in accordance with the battery shape. The battery container is subsequently sealed to obtain an all-solid-state battery. Moreover, an expanded metal, an overcurrent preventing device such as a fuse or a PTC device, a lead plate, or the like may be placed in the battery container as necessary in order to prevent pressure increase inside the battery and the occurrence of overcharging or overdischarging. The battery shape may be a coin type, a button type, a sheet type, a cylinder type, a prismatic type, a flat type, or the like.

Using the binder and binder composition for all-solid-state batteries of the present disclosure, it is possible to allow an all-solid-state battery to be favorably manufactured in the manufacturing process, as well as to provide a all-solid-state battery having good battery characteristics.

### EXAMPLES

The following describes the present disclosure based on Examples, which however shall not be construed as limiting the scope of the present disclosure. Note that "parts" and "%" in the examples refer to "parts by mass" and "% by mass", respectively, unless otherwise specified. In Examples and Comparative Examples, evaluations of the appearance of coating film, sheet flexibility and stains during pressing, and measurements of resistance were made by the methods described below.

### <Appearance of Coating Film>

The slurry compositions for solid electrolyte layers prepared in Examples and Comparative Examples were each applied onto one side of a 14 µm-thick aluminum foil using a coater with a gap of 200 µm and dried on a hot plate at 80°C to form a solid electrolyte layer. In this way specimens were prepared.

Each specimen was visually examined for the presence of any cracks on the surface. Specimens without any cracks on the surface were evaluated as being "Good" and those with any cracks on the surface were evaluated as being "Bad." The results are given in Table 1. It is assumed that all-solid-state batteries comprising a cracked coating film as a solid electrolyte layer show inferior battery performance.

### <Sheet Flexibility >

The slurry compositions for solid electrolyte layers prepared in Examples and Comparative Examples were each applied onto one side of a 14 µm-thick aluminum foil using a coater with a gap of 200 µm and dried on a hot plate at 80°C to form a solid electrolyte layer. In this way specimens were prepared.

Each specimen was punched out with a 10 mm-diameter metal puncher to produce 20 punched-out pieces, which were visually examined for edge chipping and surface cracking. Specimens that did not produce even single chipped or cracked punched-out piece among 20 punched-out pieces were evaluated as being "Good," and those produced a chipped or cracked punched-out piece were evaluated as being "Bad." The results are given in Table 1. Specimens that showed no cracking or chipping of the solid electrolyte layer indicate high flexibility of the electrode body and excellent processability in the manufacturing process.

### <Stains during Pressing>

The slurry compositions for solid electrolyte layers prepared in Examples and Comparative Examples were each applied onto one side of a 14 µm-thick aluminum foil using a coater with a gap of 200 µm and dried on a hot plate at 80°C to form a solid electrolyte layer. In this way specimens were prepared. Each specimen was punched out with a 10 mm-diameter metal puncher and consolidated at a pressure of 2M Pa using a pressing machine. The end surface of a metal rod used for pressing was visually examined for stains generated due for example to the attachment of the solid electrolyte and/or the presence of residual binder polymer. Specimens without any stains indicate excellent processability.

Specimens that did not produce even single stained punched-out piece among 20 punched-out pieces were evaluated as being "Good," and those produced a stained punched-out piece were evaluated as being "Bad." The results are given in Table 1.

### <Measurement of Resistance>

The slurry compositions for solid electrolyte layers prepared in Examples and Comparative Examples were each applied onto one side of a 14 µm-thick aluminum foil using a coater with a gap of 200 µm and dried on a hot plate at 80°C to form a solid electrolyte layer. Next, an aluminum foil having the same thickness of 14 µm was laminated on the surface of the solid electrolyte layer to form a specimen in which the solid electrolyte layer was sandwiched by the two aluminum foils. Each specimen was punched out with a 10 mm-diameter metal puncher and consolidated at a pressure of 2M Pa using a pressing machine. The resistance of the consolidated solid electrolyte layer was measured using an impedance meter with the two aluminum foils as electrodes, and was calculated from a Nyquist plot. The results are shown in Table 1. A smaller value for the resistance of the solid electrolyte layer indicates that an all-solid-state battery having better battery performance is obtained.

### (Example 1)

### <Production of Binder Polymer>

A 15L autoclave equipped with a stirrer was charged with 8,000 g of cyclohexane, 1,600 g of butadiene, 400 g of styrene and 18 mmol of tetramethylethylenediamine (TMEDA) and further with 15 mmol of n-butyllithium (n-BuLi), and a polymerization reaction was carried out at 50°C. When the polymerization conversion rate exceeded 95%, 15 mmol of denatured alcohol was added to quench the polymerization reaction.

After quenching the polymerization reaction, the solvent was removed from the polymerization solution to afford a copolymer (styrene-butadiene copolymer) as a binder polymer. For the binder polymer, the amount of the butadiene-derived vinyl structure among butadiene-derived structural units and the styrene amount (proportion of the styrene monomer unit in the styrene-butadiene copolymer) in the copolymer were measured by ¹H-NMR using FT-NMR spectrometer (ADVANCE III 500, manufactured by Bruker Biospin). The amount of the butadiene-derived vinyl structure was found to be 51% and the styrene amount was found to be 20%. The binder polymer was dissolved into xylene to afford a binder composition.

### <Production of Slurry Composition for Solid Electrolyte Layer>

100 parts of sulfide glass made of Li₂S and P₂S₅ (Li₂S/P₂S₅ = 70/30 mol%; number-average particle diameter = 1.2 µm; 90% cumulative particle diameter = 2.1 µm) as solid electrolyte particles was mixed with 2 parts (in solid content) of the binder composition. The mixture was adjusted to a solid content concentration of 30% by the addition of xylene as organic solvent and then mixed in a planetary mixer to prepare a slurry composition for solid electrolyte layers.

Using the slurry composition, the appearance of coating film, the sheet flexibility and stains during pressing were evaluated and the resistance was measured.

### (Example 2)

A binder polymer was produced as in Example 1 except that the amount of tetramethylethylenediamine (TMEDA) was changed to 12 mmol and the polymerization temperature was changed to 60°C. The amount of the butadiene-derived vinyl structure and the styrene amount (proportion of the styrene monomer unit) in the styrene-butadiene copolymer were measured as in Example 1. The amount of the butadiene-derived vinyl structure was found to be 45% and the styrene amount was found to be 20%.

A slurry composition for solid electrolyte layers was prepared as in Example 1 except that a binder composition comprising the binder polymer obtained above was used, and the slurry composition was used to evaluate the appearance of coating film, the sheet flexibility and stains during pressing and to measure the resistance.

### (Example 3)

A binder polymer was produced as in Example 1 except that the amount of tetramethylethylenediamine (TMEDA) was changed to 8.3 mmol and the polymerization temperature was changed to 60°C. The amount of the butadiene-derived vinyl structure and the styrene amount in the styrene-butadiene copolymer were measured as in Example 1. The amount of the butadiene-derived vinyl structure was found to be 25% and the styrene amount was found to be 20%.

A slurry composition for solid electrolyte layers was prepared as in Example 1 except that a binder composition comprising the binder polymer obtained above was used, and the slurry composition was used to evaluate the appearance of coating film, the sheet flexibility and stains during pressing and to measure the resistance.

### (Example 4)

A binder polymer was produced as in Example 1 except that the amount of butadiene was changed to 1,200 g, the amount of styrene was changed to 800 g, and the amount of tetramethylethylenediamine (TMEDA) was changed to 14 mmol. The amount of the butadiene-derived vinyl structure and the styrene amount in the styrene-butadiene copolymer were measured as in Example 1. The amount of the butadiene-derived vinyl structure was found to be 42% and the styrene amount was found to be 40%.

A slurry composition for solid electrolyte layers was prepared as in Example 1 except that a binder composition comprising the binder polymer obtained above was used, and the slurry composition was used to evaluate the appearance of coating film, the sheet flexibility and stains during pressing and to measure the resistance.

### (Example 5)

A binder polymer was produced as in Example 1 except that 8,000 g of xylene was used instead of 8,000 g of cyclohexane. The amount of the butadiene-derived vinyl structure and the styrene amount in the styrene-butadiene copolymer were measured as in Example 1. The amount of the butadiene-derived vinyl structure was found to be 51% and the styrene amount was found to be 20%.

A slurry composition for solid electrolyte layers was prepared as in Example 1 except that a binder composition comprising the binder polymer obtained above was used, and the slurry composition was used to evaluate the appearance of coating film, the sheet flexibility and stains during pressing and to measure the resistance.

### (Example 6)

A binder polymer was produced as in Example 5 except that the amount of butadiene was changed to 1,200 g, the amount of styrene was changed to 600 g, the amount of tetramethylethylenediamine (TMEDA) was changed to 12 mmol, and the polymerization temperature was changed to 60°C. The amount of the butadiene-derived vinyl structure and the styrene amount in the styrene-butadiene copolymer were measured as in Example 1. The amount of the butadiene-derived vinyl structure was found to be 45% and the styrene amount was found to be 30%.

A slurry composition for solid electrolyte layers was prepared as in Example 1 except that a binder composition comprising the binder polymer obtained above was used, and the slurry composition was used to evaluate the appearance of coating film, the sheet flexibility and stains during pressing and to measure the resistance.

### (Example 7)

A binder polymer was produced as in Example 5 except that the amount of butadiene was changed to 1,200 g, the amount of styrene was changed to 800 g, the amount of tetramethylethylenediamine (TMEDA) was changed to 8.3 mmol, and the polymerization temperature was changed to 60°C. The amount of the butadiene-derived vinyl structure and the styrene amount in the styrene-butadiene copolymer were measured as in Example 1. The amount of the butadiene-derived vinyl structure was found to be 25% and the styrene amount was found to be 40%.

A slurry composition for solid electrolyte layers was prepared as in Example 1 except that a binder composition comprising the binder polymer obtained above was used, and the slurry composition was used to evaluate the appearance of coating film, the sheet flexibility and stains during pressing and to measure the resistance.

### (Comparative Example 1)

A binder polymer was produced as in Example 1 except that the amount of tetramethylethylenediamine (TMEDA) was changed to 38 mmol and the polymerization temperature was changed to 60°C. The amount of the butadiene-derived vinyl structure and the styrene amount in the styrene-butadiene copolymer were measured as in Example 1. The amount of the butadiene-derived vinyl structure was found to be 67% and the styrene amount was found to be 20%.

A slurry composition for solid electrolyte layers was prepared as in Example 1 except that a binder composition comprising the binder polymer obtained above was used, and the slurry composition was used to evaluate the appearance of coating film, the sheet flexibility and stains during pressing and to measure the resistance.

### (Comparative Example 2)

A binder polymer was produced as in Example 1 except that tetramethylethylenediamine (TMEDA) was not used and the polymerization temperature was changed to 60°C. The amount of the butadiene-derived vinyl structure and the styrene amount in the styrene-butadiene copolymer were measured as in Example 1. The amount of the butadiene-derived vinyl structure was found to be 2.5% and the styrene amount was found to be 20%.

A slurry composition for solid electrolyte layers was prepared as in Example 1 except that a binder composition comprising the binder polymer obtained above was used, and the slurry composition was used to evaluate the appearance of coating film, the sheet flexibility and stains during pressing and to measure the resistance.

### (Comparative Example 3)

A binder polymer was produced as in Example 1 except that the amount of butadiene was changed to 600 g, the amount of styrene was changed to 1,400 g, the amount of tetramethylethylenediamine (TMEDA) was changed to 22 mmol, and the polymerization temperature was changed to 60°C. The amount of the butadiene-derived vinyl structure and the styrene amount in the styrene-butadiene copolymer were measured as in Example 1. The amount of the butadiene-derived vinyl structure was found to be 63% and the styrene amount was found to be 70%.

A slurry composition for solid electrolyte layers was prepared as in Example 1 except that a binder composition comprising the binder polymer obtained above was used, and the slurry composition was used to evaluate the appearance of coating film, the sheet flexibility and stains during pressing and to measure the resistance.

**Table 1**

| | | Ex. 1 | Ex. 2 | Ex. 3 | Ex. 4 | Ex. 5 | Ex. 6 | Ex. 7 | Camp. Ex. 1 | Camp. Ex. 2 | Comp. Ex. 3 |
|---|---|---|---|---|---|---|---|---|---|---|---|
| Polymerization conditions for obtaining binder polymer | Butadiene [g] | 1600 | 1600 | 1600 | 1200 | 1600 | 1200 | 1200 | 1600 | 1600 | 600 |
| | Styrene [g] | 400 | 400 | 400 | 800 | 400 | 600 | 800 | 400 | 400 | 1400 |
| | TMEDA [mmol] | 18 | 12 | 8.3 | 14 | 18 | 12 | 8.3 | 38 | - | 22 |
| | Butyl lithium [mmol] | 15 | 15 | 15 | 15 | 15 | 15 | 15 | 15 | 15 | 15 |
| | Solvent (cyclohexane) [g] | 8000 | 8000 | 8000 | 8000 | - | - | - | 8000 | 8000 | 8000 |
| | Solvent (xylene) [g] | - | - | - | - | 8000 | 8000 | 8000 | - | - | - |
| | Polymerization temp. [°C] | 50 | 60 | 60 | 50 | 50 | 60 | 60 | 60 | 60 | 60 |
| Styrene-butadiene copolymer | Amount of butadiene-derived vinyl structure [%] | 51 | 45 | 25 | 42 | 51 | 45 | 25 | 67 | 2.5 | 63 |
| | Proportion of styrene monomer unit [%] | 20 | 20 | 20 | 40 | 20 | 30 | 40 | 20 | 20 | 70 |
| Evaluation items | Appearance of coating film | Good | Good | Good | Good | Good | Good | Good | Bad | Good | Bad |
| | Sheet flexibility | Good | Good | Good | Good | Good | Good | Good | Bad | Good | Bad |
| | Stains during pressing | Good | Good | Good | Good | Good | Good | Good | Good | Bad | Good |
| | Resistance [Ω] | 3.2 | 4.5 | 3.7 | 4.8 | 3.2 | 4.5 | 5.5 | 15.1 | 11 | 25.3 |

As shown in Table 1, solid electrolyte layers obtained using a binder for all-solid-state batteries, which is a copolymer of an aromatic vinyl compound and a conjugated diene compound wherein a vinyl structure derived from the conjugated diene compound accounts for 10% by mass or more and 60% by mass or less of structural units derived from the conjugated diene compound, showed good coating film appearance and good sheet flexibility, had no stains during pressing, and allowed an all-solid-state battery obtained using the binder to have low resistance.

## Claims

1. A binder for an all-solid-state battery which is a copolymer of an aromatic vinyl compound and a conjugated diene compound,
wherein a vinyl structure derived from the conjugated diene compound accounts for 10% by mass or more and 60% by mass or less of structural units derived from the conjugated diene compound.

2. The binder for an all-solid-state battery according to claim 1, wherein the copolymer comprises a monomer unit of the aromatic vinyl compound in an amount of 10% by mass or more and 50% by mass or less.

3. A binder composition for an all-solid-state battery, comprising:
the binder for an all-solid-state battery according to claim 1 or 2; and
an organic solvent.

4. The binder composition for an all-solid-state battery according to claim 3, wherein the organic solvent has a boiling point at 1 atm of 80°C or higher.

5. The binder composition for an all-solid-state battery according to claim 3 or 4, wherein the organic solvent has a boiling point at 1 atm of 100°C or higher.

6. A method of producing a binder composition for an all-solid-state battery for obtaining the binder composition for an all-solid-state battery according to any one of claims 3 to 5, comprising:
obtaining the copolymer by solution polymerization.
